(19)

**Europäisches Patentamt**
**European Patent Office**
**Office européen des brevets**

(11)  **EP 2 047 339 B1**

(12)  **EUROPEAN PATENT SPECIFICATION**

(45) Date of publication and mention
of the grant of the patent:
**26.10.2011 Bulletin 2011/43**

(51) Int Cl.:
**G05B 19/042** *(2006.01)*     **G05B 19/418** *(2006.01)*
**G05B 23/02** *(2006.01)*

(21) Application number: **07712964.1**

(22) Date of filing: **27.03.2007**

(86) International application number:
**PCT/GB2007/001110**

(87) International publication number:
**WO 2008/012486 (31.01.2008 Gazette 2008/05)**

(54) **METHODS AND APPARATUSES FOR MONITORING A SYSTEM**

VERFAHREN UND VORRICHTUNGEN ZUM ÜBERWACHEN EINES SYSTEMS

PROCÉDÉS ET APPAREILS DE SURVEILLANCE D'UN SYSTÈME

(84) Designated Contracting States:
**DE FR GB**

(30) Priority: **27.07.2006 GB 0614964**

(43) Date of publication of application:
**15.04.2009 Bulletin 2009/16**

(73) Proprietor: **ROLLS-ROYCE PLC**
**London,**
**Greater London SW1E 6AT (GB)**

(72) Inventors:
• **TANNER, Graham, Francis**
**Derbyshire DE56 4HG (GB)**
• **MILLS, Andrew**
**Sheffield S1 3JD (GB)**

(74) Representative: **Gill, Stephen Charles et al**
**Mewburn Ellis LLP**
**33 Gutter Lane**
**London**
**EC2V 8AS (GB)**

(56) References cited:
EP-A- 0 381 600         EP-A- 1 236 986
EP-A1- 0 553 571        WO-A-02/099550
WO-A-2004/114133        US-A- 5 463 768
US-A- 6 157 310         US-A1- 2005 060 323

• **TRAVE-MASSUYES, L.; MILNE, R.: "Gas-turbine condition monitoring using qualitative model-based diagnosis" IEEE INTELLIGENT SYSTEMS AND THEIR APPLICATIONS, [Online] vol. 12, no. 3, June 1997 (1997-06), pages 22-31, XP002452713 Retrieved from the Internet: URL: http://ieeexplore.ieee.org/search/wrap per.jsp? arnumber=590070> [retrieved on 2007-09-26]**

**Description**

The present invention relates to methods and apparatuses for monitoring a system. The invention is particularly, but not exclusively, concerned with monitoring a complex mechanical system such as a power plant, including for example gas turbine, spark ignition and compression ignition internal combustion engines.

Known systems monitor the condition of a system by monitoring and analysing a series of measurable indicators which themselves reflect aspects of the condition of the system. These indicators can be represented by features, each feature reflecting an aspect of the condition of the system. The value or quality of the feature can vary as the condition of the system changes over time.

For instance, modern gas turbine engines are equipped with a plurality of sensors measuring, for example, temperatures, pressures, speeds, vibration levels and oil debris. Functional sub-systems have been developed which perform on-engine processing of some of these measured signals in order to generate features. A feature may, for example, reflect the presence or absence of a particular pattern of sensor measurements, or indicate that a sensor measurement has exceeded a certain threshold.

An example of such a sub-system is shown in WO02/03041, which describes methods for generating features which reflect the vibration state of a system such as a gas turbine engine using performance data and vibration data acquired from analogue vibration transducers connected to the engine. An embodiment of the method disclosed has been implemented in the QUICK™ system produced by Oxford Biosignals Ltd. of Oxford, UK.

Individual features and/or raw sensor measurements can give some indication of the condition of the engine, but generally must be combined in order to best determine the health of the engine and isolate any failure. In particular, a pattern of features generated by one or more sub-systems can represent the state of health of the engine. That is, a specific engine fail case can be associated with a specific pattern of features.

Particularly with complex mechanical systems such as gas turbines, the number of features which must be monitored to obtain a useful overall picture of the system's condition in order to recognise a pattern of features associated with a fail case can be high. This in turn means that the task of analysing the complete series of features to determine the health of the engine is a complex one, typically requiring a skilled expert to analyse the data off-line.

A known system which monitors the condition of an industrial gas turbine is described in 'Case-Based Reasoning for Gas Turbine Diagnostics', Devaney et al., American Association for Artificial Intelligence, 2005. This system compares extracted engine attributes with data from prior failure events held in a Case Library, and uses the result to provide a diagnosis. A drawback to such an approach is the reliance on in-service data, large quantities of which must be gathered before the system can be applied to an engine. Thus, the system cannot be applied to a new engine. Further, the infrastructure required to implement the necessary feedback mechanism for such a system can be complex and expensive because of the requirement to process very large quantities of data.

Another known system is the TIGER system disclosed in GB2323197 and 'TIGER with model based diagnosis: initial deployment', Milne et al., Knowledge-Based Systems, Vol 14, p 213-222, 2001. This system recognises a fail case when enough 'fault tokens' are generated within a certain time limit to fill a 'temporal bucket'. However, the TIGER system cannot detect when a pattern of symptoms closely approaches, but does not match, a known fail case, or take account of the absence of, rather than presence of, a particular symptom, or distinguish between fail cases which exhibit the same symptoms. Moreover, the rules representing the known fail cases (the knowledge) cannot be easily updated since they are embedded in the software code.

US 2005/0060323 proposes a case-based reasoning approach to diagnosing equipment failures. The present invention seeks to improve on these known systems and, in general terms, provides a method for determining probable fail cases of a system or determining a probable faulty component of a system including the steps of:

(a) receiving a pattern of input features, each feature representing measurable indicators which themselves are indicative of the condition of the system;
(b) providing a set of fail cases, each fail case being represented by an expected pattern of input features; and
(c) for each fail case, performing a comparison of the expected pattern of input features representing that fail case.

An approach outside the present invention provides a method for determining probable fail cases of a system, the method including the steps of:

(a) receiving a pattern of input features, each feature representing measurable indicators which themselves are indicative of the condition of the system;
(b) providing a set of fail cases, each fail case being represented by an expected pattern of input features, and each fail case being associated with a rule in reverse polish notation which produces a true result if the expected pattern for that rule correlates with a pattern of input features or a false result if the expected pattern for that rule does not correlate with a pattern of input features; and

(c) applying the received pattern of input features to each rule to determine whether the received pattern has a true result or a false result for the respective fail case, a true result denoting a probable fail case of the system.

Thus, for each fail case represented by a rule, a comparison can be made with the received pattern of input features to determine whether the result is an exact match (true result) or a non-match (false result). The, or each, fail case for which the received pattern has a true result is denoted a probable fail case of the system.

Reverse polish notation (RPN) provides a compact format for rule representation and enables quick computation. Additionally, all RPN represented rules can be encoded in a single table. Further, sensor measurements, or other data, may be compared with threshold values in order to generate new features which can be used alongside those generated externally.

In a first aspect, the present invention provides a method for determining probable fail cases of a system according to claim 1.

Thus, where multiple fail cases are detected as possible matches to a received pattern of input features and included in the subset of probable fail cases, confirmatory features may be used to further differentiate between the fail cases and thereby reduce any ambiguity. Confirmatory features may be generated by comparing a measured value, such as a sensor measurement, with a predicted value produced by a system model. A system model may be a time-domain physical model of the system inputs and outputs, or a statistical life expiry model which predicts the life expiry of a system component.

The method may further include a step of conveying, storing or displaying the most probable fail cases.

Preferably, each fail case is associated with one or more weighting factors, each weighting factor representing a likelihood of a fault being present in a respective system component, the method further including the step of:

(d) combining (for example, multiplying), for each most probable fail case from sub-step (c-v), the score calculated at sub-step (c-iv) with the or each weighting factor associated with that fail case in order to determine a probable faulty system component.

In this way, only those fail cases identified as most probable fail cases are scored and go on to influence the identification of a probable faulty system component.

The use of RPN in accordance with the above-mentioned approach outside the present invention may be used to implement steps (a) to (c) of the second aspect of the invention.

Some preferred and/or optional features of the first aspect of the present invention are set out below. These may be applied in any combination, or may be applied separately, as the context demands.

Each system component is preferably a line replaceable unit.

Further, the weighting factors are preferably stored in an updatable look-up table in order that the weighting factors may be updated, or new weighting factors added, during the life of the system. The rules are also preferably stored in an updatable look-up table in order that the rules may be updated, or new rules added, during the life of the system.

The, or each, method preferably further includes preliminary steps of measuring the indicators and forming the pattern of input features.

Preferably, the system is a gas turbine engine, more preferably a gas turbine engine mounted on an aircraft.

The, or each, method may further include a step of conveying, storing or displaying information identifying the probable faulty component.

In a further aspect, the present invention also provides a computer system configured to perform the method of the first aspect.

Thus the system of this aspect of the invention corresponds to the method of the first aspect, and optional features of the first aspect described herein pertain also to the system of the present aspect.

A related aspect of the invention provides a computer program which, when run on a suitable computer system, performs the method of the first aspect.

A still further aspect of the invention provides a computer program product carrying the computer program of the previous aspect.

Preferred embodiments of the invention will now be described by way of example, with reference to the accompanying drawings, in which:

Fig. 1 is a process diagram showing the main process operations of an embodiment of the present invention; and

Figs. 2a and 2b are flow diagrams showing an overview of the mapping processes of an embodiment of the present invention.

In the preferred embodiments described, the mechanical system to be monitored is an aircraft-mounted gas turbine engine.

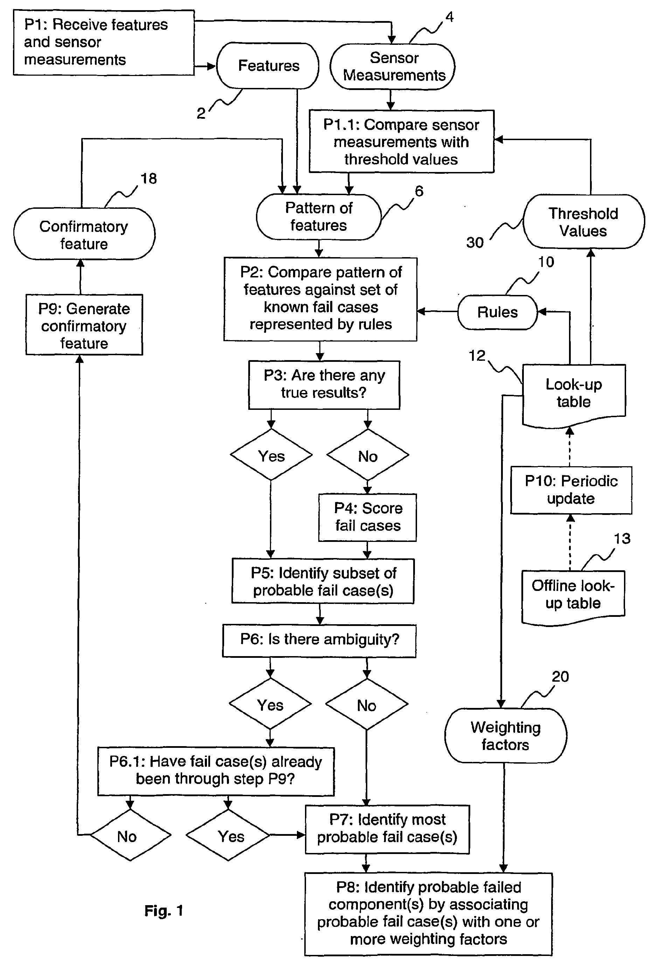

A diagram showing the main process operations of an embodiment of the present invention is shown in Fig. 1.
The main stages in the monitoring process are as follows:

1. Receiving features 2 and sensor measurements 4 (step P1), and optionally converting received sensor measurements into features (step P1.1) using threshold values 30, the result being a received pattern 6 of input features;

2. Identifying a subset of probable fail case (s) (step P5) by: 2.1 comparing the received pattern of features with a set of known fail cases, each represented by a rule 10, to find true results (exact matches) and/or fail results (non-matches) (steps P2 and P3), and

2.2 particularly where there are no true results for any of the fail cases of the set (but optionally for fail cases where there are true results, or even in place of stage 2.1 entirely), calculating scores for each fail case (step P4);
3. Determining whether there is ambiguity (step P6), i.e. whether multiple fail cases are identified as probable fail cases, and, where there is ambiguity, generating a confirmatory feature 18 (step P9), adding it to the pattern 6 of input features and repeating steps P2 to P6 for one cycle only (step P6.1); and
4. Identifying the most probable fail case (s) (step P7) and, optionally, identifying probable failed component (s) by associating each most probable fail case with one or more weighting factors 20, each reflecting the likelihood of failure of a particular component (step P8).
These stages, and the relationships between them, will be described in more detail in the following description of the preferred embodiments.

1. Received inputs

The monitoring process receives input features 2 and sensor measurements 4 (step P1), The sensor measurements can be converted into features (step P1.1) by the process. The received features and converted features together form a pattern 6 of input features.
A feature may, for example, reflect the presence or absence of a particular pattern of sensor measurements, or indicate that a sensor measurement has exceeded a certain threshold. Features are typically binary, i.e. have a value of either 0 or 1. Features do not necessarily indicate an engine fault, but can instead represent a picture of the state of the engine at a particular point in time.
In a gas turbine engine, features can be generated by known sub-systems which perform on-engine processing of measured signals. Examples of such sub-systems are described below.
Built-In Test Equipment (BITE) is a sub-system commonly used to generate features in modern gas turbine engines. The features generated by BITE typically relate to engine accessory faults. 'Evaluation of Built-In Test', Pecht et al., IEE Transactions on Aerospace and Electronic Systems, Vol. 37, No. 1 January 2001, describes the use of BITE to detect faults in a system in-situ.
WO02/0304 describes methods for generating features which reflect the vibration state of a system such as a gas turbine engine using performance data and vibration data acquired from analogue vibration transducers connected to the engine. An embodiment of the method disclosed has been implemented in the QUICK™ system produced by Oxford Biosignals Ltd. of Oxford, UK.
Debris in the lubrication system of a mechanical system such as a gas turbine engine can be monitored using magnetic chip collectors, such as those produced by Tedeco (http://www.tedecoindustrial.com/mag.htm). Features can be generated when the levels of debris present in the oil detected by the magnetic chip collectors exceed certain threshold levels.
In a gas turbine engine the Electronic Engine Controller (EEC) can generate features in response to a detected event such as an engine surge, or in response to the state of the engine (i.e idle, cruise, on-ground etc.).
Features can also be generated by comparison of sensor measurements or other data, such as the age of an engine component, for example, with threshold values 30 by the monitoring system itself (step P1.1). Such processes are described below. The threshold values can be held in an updatable offline look-up table 13 described further below. The above is not an exhaustive list of the means by which features can be generated, but rather a sample of possible sub-systems and methods.

2. Isolation of probable fail cases

The pattern of features generated by the above sub-systems or methods within a certain timeframe is compared with a series of known feature patterns, each corresponding to a known fail case (step P2). A fail case comprises all, or some, of the following: a set of features that are expected to be present (EXPECTED), a set that are not expected to be present (NOT EXPECTED), and a set that may or may not be present (MAYBE). Each fail case can be associated with a rule 10 representing the known feature pattern associated with that fail case.

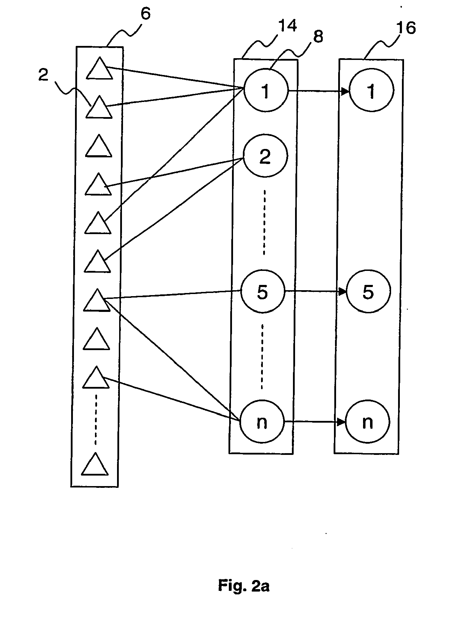

Fig. 2a shows how a received pattern 6 of features 2 is compared with a set 14 of n fail cases 8. Each mapping of features 2 to a fail case 8 can be one-to-one, many-to-one, one-to-many, or many-to-many, and is determined by the specific rule 10 for that fail case. The bias for each mapping is typically 1. However, it would be possible to introduce different biases to take account of the reliability and accuracy attributed to a particular feature 2.

Typically, rules are sub-divided into two categories: simple rules and complex rules. While any number of Boolean AND operators, for example, may be chained together in a simple Boolean expression without uncertainty about the order in which the operators should be applied, the same is not true of a logical expression containing a combination of AND, OR and NOT operators. The uncertainty can be removed by the use of parentheses to clarify the order in which the operators are applied. For example, consider the expression X AND Y OR Z. As written here it is not clear which operator should be applied first, the AND or the OR. There are two possible interpretations, which look like this: (X AND Y) OR Z; X AND (Y OR Z). Parentheses are therefore necessary in a complex Boolean expression to avoid any uncertainty about the order in which the operators should be applied.

Thus, complex rules can be defined as those rules which, when represented in a Boolean expression, require parentheses to dictate the order of operations, i.e. they have nested logic structures. Simple rules can be defined as those rules which do not require parentheses.

The significance of these two types of rules will be discussed below.

Returning to Fig. 1, it can be seen that the rules 10 may be stored in an updatable look-up table 12. The look-up table may be separate from the executable code which, in an aircraft-mounted gas turbine engine, is subject to aviation authority certification requirements. Thus, the rules 10 can be altered, or new rules added, during the life of the engine without changing the executable code and therefore without recertification of the engine.

The update process takes place off-line, by updating the offline look-up table 13 within a user interface software tool. The data held in the updated offline look-up table 13 is then exported to the monitoring system as a text file, or similar, and is used to update the look-up table (step P10).

2.1 Identifying true and false results

If the result of a comparison between the received pattern 6 of input features and a rule 10 for a particular fail case is a pass then that fail case has a true result for the received pattern, typically represented by a score of value 1. Alternatively, if the result is a fail then that fail case has a false result for the received pattern, typically represented by a score of value 0. Thus, exact matches or non-matches can be identified (step P3).

The simple and complex rules are preferably represented by a single logical reverse polish notation (RPN) expression. RPN is a stack-based method for performing operations on data. Each RPN represented rule is a set of logic operations to be performed on the inputs, and each comprises at least one line made up of an input feature and an operator. Each operator defines the actions to be taken, which may be simply storing the feature to the stack, or performing a logic operation on one or more features in the stack and storing the result to the stack.

The principles of RPN may be understood by considering the sum 3* (4+7). This could be represented in RPN by, for example, the expression "3, 4, 7, +, *" or the expression "4, 7, +, 3, *", and the calculation carried out as shown in Tables 1a or 1b

| Input | Stack |
|---|---|
| 3 | 3 |
| 4 | 3, 4 |
| 7 | 3, 4, 7 |
| + | 3, 11 |
| * | 33 |
| Result | 33 |

**Table 1a**

| Input | Stack |
|---|---|
| 4 | 4 |
| 7 | 4, 7 |
| + | 11 |
| 3 | 11, 3 |
| * | 33 |
| Result | 33 |

**Table 1b**

Thus operators such as +, * etc. operate on one or more items at the top of the stack. An operator cannot operate on items anywhere other than at the top of the stack.

Table 2 shows an example fail case represented by complex rule NOT (X AND Y) OR Z represented in RPN. The logic operators NOT, AND, and OR operate according to the standard logic protocols. Features X, Y and Z can either have a value of 0 or 1, and represent part or all of the received pattern of input features. In the example shown features X, Y and Z all have value 1.

**Table 2**

| Input | Stack |
|---|---|
| X | 1 |
| Y | 1, 1 |
| AND | 1 |
| NOT | 0 |
| Z | 0, 1 |
| OR | 1 |
| **Result** | **1** |

Thus, in this example the fail case has a true result for the received pattern of input features, since the result of the operations on the stack is 1.

RPN provides a compact format for rule representation and enables quick computation. Advantageously, all rules can be encoded in a single table.

A further advantage of RPN representation of rules is that it allows sensor measurements, or other data, to be compared with threshold values in order to generate new features which can be used alongside those generated by the sub-systems. Threshold operators such as GT (greater than) and LT (less than) are used, and a feature with value 1 will be generated when the threshold requirement is met, or value 0 when the threshold requirement is not met.

For a received pattern of input features, the fail case or fail cases with a true result are identified as probable fail cases belonging to the subset 16 of probable fail cases (step P5).

Optionally, where there are no fail cases with true results, the set of fail cases may be scored in order to determine the closeness of fit of those fail cases to the received pattern (step P4). This process is described below.

2.2 Scoring fail cases

It is useful to be able to determine the closeness of fit of fail cases to a received pattern of input features in order to identify the closest matches. Such a technique can be advantageous because, given the complex nature of a mechanical system such as a gas turbine engine, some fail cases may exhibit variation in how they are manifested. In particular, identification of near matches is useful when no exact matches (true results) have been identified. The fail case or fail cases which represent the closest matches can be identified as probable fail cases belonging to the subset of probable fail cases (step P5).

In order to score a fail case, a hit or miss result can be calculated for each input feature; a hit being when an EXPECTED feature is present or a NOT EXPECTED feature is not present, and a miss being when an EXPECTED feature is not present or a NOT EXPECTED feature is present.

For each fail case the number of hit results can be compared with the number of miss results in order to calculate a score representing the closeness of fit, or quality of match, of that fail case with the received pattern of input features. Thus, fail cases can be ranked according to the closeness of fit of each to the received pattern.

Table 3 illustrates the hit and miss results for a fail case. States A and D indicate a hit, and states B and C indicate a miss. The MAYBE condition indicates a set of features that may or may not be present, and state M therefore includes features which may be either present or absent, but which are neither EXPECTED nor NOT EXPECTED.

**Table 3**

| | | Rule Feature | | |
|---|---|---|---|---|
| | | **EXPECTED** | **NOT EXPECTED** | **MAYBE** |
| **Input Feature** | **PRESENT** | A | B | M |
| | **ABSENT** | C | D | M |

Each state (A, B, C and D) can be assigned a numerical value based on its perceived importance in determining the closeness-of-fit. For example, state A may be assigned a value of 5 (i.e. 5 for each feature which is EXPECTED and present), states B and C may be assigned a value of 2, and state D may be assigned a value of 1. Typically, the state values are identical for all rules and are stored in a configuration table which itself is stored in the updatable look-up table.

States A, B, C and D can then be used to calculate a score for each fail case.

The arrangement of operators in a complex rule prevents hit and miss results from being calculated for each input feature. This is because of the aforementioned inter-dependence of the operators in a complex rule. That is, in a complex rule features must be combined in a given sequence, and so a simple hit/miss result cannot be calculated for each feature.

However, scores are calculated as described below for the fail cases represented by simple rules.

For simple rules two types of score can be used: the hit-miss score and the hit score.

$$Hit-miss\ score = \frac{\sum A + D}{\sum B + C} \qquad\qquad Equation\ (1)$$

where if $B + C = 0$ then set $B + C = 0.1$

$$Hit\ score = \frac{\sum A + D}{\sum A + B + C + D} \qquad\qquad Equation\ (2)$$

These two types of score are each useful in different ways. The hit score has the advantage of normalising the result so that the scores of different fail cases can be easily compared with one another. The hit-miss score allows matching fail cases to be distinguished between by use of the MAYBE condition.

To illustrate the use of the MAYBE condition, consider two fail cases, fail case X and fail case Y, which are identical except that for a particular feature fail case X has an EXPECTED condition, whereas fail case Y has a MAYBE condition. When that feature is present, fail case X will have one more feature in state A than fail case Y, and a consequently higher hit-miss score. Conversely, when that feature is not present fail case X will have one more feature in state C than fail case Y, and a consequently lower hit-miss score.

Where a fail case includes features from more than one sub-system, a modified scoring method can be used. This is because of the difference in the density of features produced by the different sub-systems. For example, the QUICK™ system may generate a high density of features relating to core engine vibrations, whereas BITE may only generate a single feature which represents a particular type of engine accessory failure.

The average sub-system hit score can therefore be used.

$$Average\ sub-system\ hit\ score = \frac{\sum_{i=1}^{j}\left(\frac{\sum A_i + D_i}{\sum A_i + B_T + C_T + D_i}\right)}{j} \qquad Equation\ (3)$$

where $j$ = number of subsystems with features included in the fail case
$i$ = sub-system number
$B_T + C_T$ = total misses

The average sub-system hit score is based on the hit score because of its aforementioned normalising property which gives a maximum score per sub-system of 1. The sub-systems are typically each assumed to be equally reliable an indicator of failure, although they could be weighted if appropriate.

The decision of which fail case score to use - hit score, hit-miss score, or average sub-system hit score - can be determined by the criteria set out in Table 4.

**Table 4**

| | Features from: | |
|---|---|---|
| | **Same sub-system** | **More than one sub-system** |
| **Exact match with state A hits** | Hit-miss score | Average sub-system hit score |
| **No exact match** | Hit-miss score | Average sub-system hit score |

Thus, the hit-miss score is typically used where the features included in a particular fail case are generated by the same sub-system. This allows the MAYBE condition to be used to distinguish between otherwise matching fail cases. Where the features of a particular fail case are generated by different sub-systems the average sub-system hit score is typically used to ensure that information from sub-systems which produce a low density of features does not become insignificant.

After the fail cases have been scored, they may be post-processed to remove all but those with the highest scores. The threshold can be taken to be a defined percentage of the maximum score.

Examples 1 and 2

Examples of the calculation of scores for two different fail cases are shown below. In the examples, state A is assigned a value of 5 and state B is assigned a value of 2. The terms are defined as follows:

| | | |
|---|---|---|
| • 26-32003(L) | : | a feature from BITE indicating a faulty pressure sensor |
| • P30 | : | a real value of the pressure sensor |
| • MODE: On Maintenance Power | : | an engine mode feature |
| • Noise | : | a feature from QUICK™ indicating a vibration condition |

*Example* 1

Fail case rule:

IF P30>300 AND 26-32003(L) AND MODE: On Maintenance Power AND NOT Noise THEN TRUE

Table 5 shows the result calculated for each input. Note that although P30 is a real sensor value rather than a feature, a feature with value 1 is produced if the threshold criteria are met (a hit result). If the threshold criteria were not met (i.e. P30 was under 300) then a feature with value 0 would be produced (a miss result). Thus, P30>300 is an example of conversion step P1.1 of the process shown in Fig. 1.

**Table 5**

| | RULE (Fail Case) | INPUT | RESULT | STATE | STATE VALUE |
|---|---|---|---|---|---|
| **26-32003 (L)** | EXPECTED | PRESENT | Pass | A | 5 |
| **P30** | >300 | 360 | Pass | A | 5 |
| **MODE: On Maintenance Power** | EXPECTED | PRESENT | Pass | A | 5 |
| **Noise** | NOT EXPECTED | PRESENT | Fail | B | 2 |

The inputs therefore do not provide an exact match with this fail case because the feature Noise is present but NOT EXPECTED. The scores are calculated below.

From Equation (1):

$$\text{Hit-Miss Score} = ((5+5+5)+0)/(2+0) = 7.5$$

From Equation (2):

```
Hit Score = ((5+5+5)+0)/((5+5+5)+2+0+0) = 0.88
```

These scores can be compared with those of Example 2 below, in which the feature Noise is still present but now represented by a MAYBE term.

*Example 2*

The rule for this fail case is similar to that shown in Example 1, but with the difference that a MAYBE term is introduced to indicate that the feature Noise is neither EXPECTED nor NOT EXPECTED:

IF P30>300 AND 26-32003(L) AND MODE: On Maintenance Power AND MAYBE Noise THEN TRUE

Table 6 shows the result calculated for each input.

**Table 6**

|  | RULE (Fail Case) | INPUT | RESULT | STATE | STATE VALUE |
|---|---|---|---|---|---|
| **26-32003(L)** | EXPECTED | PRESENT | Pass | A | 5 |
| **P30** | >300 | 360 | Pass | A | 5 |
| **MODE: On Maintenance Power** | EXPECTED | PRESENT | Pass | A | 5 |
| **Noise** | MAYBE | PRESENT | Pass | M | - |

As for Example 1, the result for each of 26-32003(L), P30 and MODE: On Maintenance Power is a pass. However, because Noise is represented by a MAYBE term it does not contribute to the scoring.
From Equation (1):

```
Hit-Miss Score = ((5+5+5)+0)/(0+0) = 150
```

Note that since B + C = 0, it is replaced by 0.1, as required by Equation (1).
From Equation (2):

```
Hit Score = ((5+5+5)+0)/((5+5+5)+0+0+0) = 1
```

The hit score for the fail case of Example 2 is higher than that of the fail case of Example 1 where the feature Noise was NOT EXPECTED but present (state B) .
Note that, since the features of the fail cases of Examples 1 and 2 come from different sub-systems, the hit-miss score is not the preferred score for comparison (see Table 4). The average sub-system hit score could have been used instead of the hit score, in order to ensure that information from sub-systems which produce a low density of features did not become insignificant.

3. Confirmatory process

In some cases, multiple fail cases may be detected as possible matches to a received pattern of input features and included in the subset of probable fail cases, thus introducing ambiguity (step P6). These may be fail cases with true results for the received pattern, or fail cases with equal or similar scores. When this happens, confirmatory features 18 are generated (step P9) to further differentiate between the fail cases and thereby reduce any ambiguity.
Confirmatory features may be generated, for example, by comparing a measured value, such as a sensor measurement, with an expected value produced by a system model. The difference between the two values is compared against a given threshold value: when the threshold criteria are met a confirmatory feature with a value of 1 is generated; when the threshold criteria are not met a confirmatory feature with a value of 0 is generated.
A system model may be a time-domain physical model of the system inputs and outputs, or a statistical life expiry model which predicts the life expiry of a system component 22 such as a line replaceable unit (LRU).
A physical model may, for example, predict the value of a sensor measurement. A real sensor measurement value may therefore be compared with this predicted value, and the difference between the two used to generate a confirmatory feature.

A predicted life of a system component generated by a life expiry model may be, for example, compared with the actual age of the system component. The difference between the two values can be used to generate a confirmatory feature. However, a life expiry model used in this way generally requires a fail case which is associated with only one weighting factor and therefore one system component.

Appropriate models for use in generating confirmatory features for gas turbine engines are described in 'Integrated In-Flight Fault Detection and Accommodation: A Model-Based Study', Rausch et al., ASME Turbo Expo 2005: Power for Land, Sea and Air, June 6-9 2005, and 'Dynamic Modelling for Condition Monitoring of Gas Turbines: Genetic Algorithms Approach', Breikin et al., IFAC, 2005.

Of the fail cases of the set of known fail cases, those fail cases with an available confirmatory feature are initially scored without the confirmatory feature present in the received pattern of input features in order to generate an initial score ($score_{initial}$). Where several fail cases are identified as possible matches to the received pattern the scoring for each fail case with an available confirmatory feature is then repeated but with the confirmatory feature included, in order to generate a confirmatory score (score-confirmatory). The final score is then calculated as follows:

$$Score_{Final} = \big(1 + (Score_{Confirmatory} \times c)\big) \times Score_{Initial} \qquad \text{Equation (4)}$$

where c = constant for confirmatory rules

In the equation, the initial score and confirmatory score can be represented by the hit score.

This final score may help to reduce ambiguity when several fail cases are identified as possible matches.

*Example 3*

This example illustrates the use of confirmatory features. The definitions of the terms are the same as those in Examples 1 and 2, except that a new term is introduced:

• DELTA_P30       :       a confirmatory feature representing the difference between a sensed pressure and a predicted pressure produced by a model

The fail case rule is:

IF DELTA_P30>300 AND 26-32003(L) AND MODE: On Maintenance Power AND NOT Noise THEN TRUE

Since DELTA_P30 is defined as a confirmatory feature the scoring is initially carried out with the remaining features only, as shown in Table 7.

**Table 7**

|  | RULE (Fail Case) | INPUT | RESULT | STATE | STATE VALUE |
|---|---|---|---|---|---|
| **26-32003(L)** | EXPECTED | PRESENT | Pass | A | 5 |
| **MODE: On Maintenance Power** | EXPECTED | PRESENT | Pass | A | 5 |
| **Noise** | NOT EXPECTED | PRESENT | Fail | B | 2 |

The initial score is as follows.

From Equation (2):

Hit Score$_{initial}$ = ((5+5)+0)/((5+5)+2+0+0) = 0.83

If multiple fail cases are detected as possible matches to the input features, then the scoring process can be repeated with the confirmatory feature included, as shown in Table 8.

**Table 8**

| | RULE (Fail Case) | INPUT | RESULT | STATE | STATE VALUE |
|---|---|---|---|---|---|
| **26-32003(L)** | EXPECTED | PRESENT | Pass | A | 5 |
| **DELTA P30** | >300 | 340 | Pass | A | 5 |
| **MODE: On Maintenance Power** | EXPECTED | PRESENT | Pass | A | 5 |
| **Noise** | NOT EXPECTED | PRESENT | Fail | B | 2 |

The confirmatory score is therefore as follows.

From Equation (2):

$$\text{Hit Score}_{confirmatory} = ((5+5+5)+0)/((5+5+5)+2+0+0) = 0.88$$

So, in this case the hit score is slightly increased when the confirmatory feature is included.

Taking c = 0.5, from Equation (4), the final score is:

$$\text{Score}_{Final} = (1 + (0.88 \times 0.5) \times 0.83 = 1.20$$

In this example, the final score is higher than either the initial score or confirmatory score. Thus, a bias towards fail cases with confirmatory features can be introduced. This effect can be controlled by control of the constant c.

4. System Component Scoring

The, or each, probable failed system component may be identified by associating identified probable fail cases with one or more weighting factor (step P8).

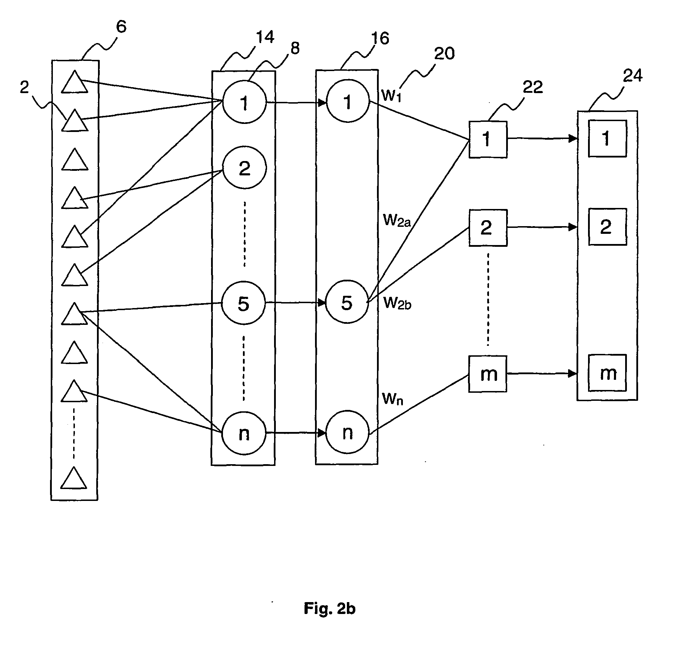

From Fig. 2b it can be seen that each fail case 8 is associated with one or more weighting factor 20. In the figure, only the weighting factors for the fail cases within the subset 16 of probable fail cases are shown. However, preferably all fail cases of the set 14 of fail cases are associated with one or more weighting factors. The weighting factors are held with the rules in the updatable look-up table and can therefore be altered if new knowledge is gained during the life of the system.

Each weighting factor is associated with one system component 22 such as an LRU, and reflects the likelihood of a failure of that component given the detection of the fail case associated with that weighting factor. A high weighting factor indicates a high likelihood of failure, and vice versa. The weighting factors may be determined based on the results of a Failure Mode Effects Analysis (FMEA) or Fault Tree Analysis, for example. The weighting factors may also be altered during the life of the engine to reflect the age of individual components, as described below. Usually, the sum of weighting factors for each fail case will be 1.

Table 9 illustrates the application of weighting factors 20 from three different fail cases onto a plurality of LRUs. The weighting factors shown are purely illustrative.

**Table 9**

| | Fail Case | | |
|---|---|---|---|
| | **1** | **2** | **3** |
| **LRU1** | 0.33 | 0.5 | 0 |
| **LRU2** | 0.33 | 0 | 0 |
| **LRU3** | 0 | 0.5 | 0 |
| **LRU4** | 0.33 | 0 | 1 |

The amount of confidence that can be attributed to a prediction is approximated by the maximum hit score (Max Hit Score) for the fail cases scored. If there is an exact match for a fail case then the maximum hit score will be 1 and the total confidence value to be allotted to individual system components will be 100%. If there is no exact match then the total confidence value to be allotted will be only as high as the maximum hit score multiplied by 100%.

In order to determine the likelihood of failure of each system component, the Component Score is calculated:

*Component Score = Weighting Factor $\times$ Fail Case Score Equation* (5)

From this, a Component Confidence value for each component can be found:

$$Component\ Confidence = \frac{Component\ Score}{\sum Component\ Scores} \times Max\ Hit\ Score \times 100$$

$$...Equation\ (6)$$

These scores can be used to determine a probable faulty system component, or a set 24 of probable faulty system components.

The weighting factors associated with respective components may be altered based on the outputs of a life expiry model. For example, if a comparison of a predicted life of a component with the actual age of that component indicates that the component is approaching its predicted life or has exceeded it then the weighting factor would be increased accordingly. The Component Score and Component Confidence values for that component would be increased in consequence.

*Example 4*

The calculation of the Component Score and Component Confidence is illustrated by the example below, in which the weighting factors from Table 9 are used. The fail case of Example 1 represents Fail Case 1, the fail case of Example 2 represents Fail Case 2, and the fail case of Example 3 represents Fail Case 3.

From Equation (5):

$$Component\ Score = \begin{bmatrix} 0.33 & 0.5 & 0 \\ 0.33 & 0 & 0 \\ 0 & 0.5 & 0 \\ 0.33 & 0 & 1 \end{bmatrix} \times \begin{bmatrix} 0.88 \\ 1 \\ 1.20 \end{bmatrix} = \begin{bmatrix} 0.79 \\ 0.29 \\ 0.5 \\ 1.49 \end{bmatrix} \begin{matrix} (LRU1) \\ (LRU2) \\ (LRU3) \\ (LRU4) \end{matrix}$$

Matrices are used here to enable Component Scores to be found for all components in a single calculation.

The Max Hit Score is 1 (for Fail Case 2 (Example 2)), therefore from Equation (6):

$$Component\_1\ Confidence = \frac{0.79}{3.07} \times 1 \times 100\% = 25.7\%$$

$$Component\_2\ Confidence = \frac{0.29}{3.07} \times 1 \times 100\% = 9.4\%$$

$$Component\_3\ Confidence = \frac{0.5}{3.07} \times 1 \times 100\% = 16.3\%$$

$$Component\_4\ Confidence = \frac{1.49}{3.07} \times 1 \times 100\% = 48.5\%$$

Thus, Component_4 is found to be the component most likely to have failed, followed by Component_1. Component_2 and Component_3, which have quite low scores, are less likely to have failed.

5. Alternative process steps

In practice it has been found that an overriding symptom of an engine failure can be the engine mode. In an aircraft-mounted gas turbine engine such modes include take-off, cruise, etc. Thus, it may be useful for some fail cases to be scored only when the engine is in a particular mode.

This can be accomplished by the use of a special feature which represents the engine mode, i.e. an engine mode feature. Before a fail case is scored an initial check may be performed to ascertain whether a certain engine mode feature is present. A particular fail case may be associated with one or several engine modes, and the check may therefore ascertain whether a particular engine mode feature, or one of many possible engine mode features, is present. The fail case may only be scored if the initial check is successful, i.e. if a required engine mode feature is present.

**Claims**

1.  A method for determining probable fail cases of a system, the method including the steps of:

    (a) receiving a pattern of input features, each feature representing measurable indicators which themselves are indicative of the condition of the system;
    (b) providing a set of fail cases, each fail case being represented by an expected pattern of input features, the expected pattern specifying a set of features which are expected to be present in the fail case and a set of features which are expected to be absent in the fail case; and
    (c) for each fail case, performing a comparison of the expected pattern of input features representing that fail case to determine probable fail cases of the system; wherein in step (c) the comparison is performed by the sub-steps of:

    (c-i) for each fail case, calculating a score for a comparison of the expected pattern of input features representing that fail case with the received pattern of input features;
    (c-ii) determining a subset of probable fail cases based on the scores calculated at step (c-i) and determining whether there is ambiguity between the probable fail cases of the subset;
    (c-iii) for each fail case of the subset where there is ambiguity, generating a further input feature by:

    predicting, from a model of the system, a value for a further measurable indicator,
    receiving a measured value for the further indicator, and
    comparing the predicted and received values;

    (c-iv) for each fail case of the subset, calculating a score for a comparison of the expected pattern of input features representing that fail case with the received pattern of input features and the further input feature generated at step (c-iii); and
    (c-v) determining most probable fail cases based on the scores calculated at step (c-iv).

2.  A method according to claim 1, wherein each fail case is associated with a rule in reverse polish notation which produces a true result if the expected pattern for that rule correlates with a pattern of input features or a false result if the expected pattern for that rule does not correlate with a pattern of input features, and in step (c) the comparison is performed by applying the received pattern of input features to each rule to determine whether the received pattern has a true result or a false result for the respective fail case, a true result denoting a probable fail case of the system.

3.  A method according to claim 2, wherein the rules are stored in an updatable look-up table.

4.  A method according to anyone of claims 1 to 3, wherein each fail case is associated with one or more weighting factors, each weighting factor representing a likelihood of a fault being present in a respective system component, the method further including the step of:

    (d) combining, for each most probable fail case from sub-step (c-v), the score calculated at sub-step (c-iv) with the or each weighting factor associated with that fail case in order to determine a probable faulty system component.

**5.** A method according to claim 4, wherein each system component is a line replaceable unit.

**6.** A method according to anyone of claims 4 to 5, wherein the weighting factors are stored in an updatable look-up table.

**7.** A method according to anyone of the preceding claims, further including preliminary steps of measuring the indicators and forming the pattern of input features.

**8.** A method according to anyone of the preceding claims, wherein the system is a gas turbine engine.

**9.** A method according to claim 8, wherein the gas turbine engine is mounted on an aircraft.

**10.** A computer system configured to perform the method of anyone of claims 1 to 9.

**11.** A computer program which, when run on a suitable computer system, performs the method of anyone of claims 1 to 9.

**12.** A computer program product carrying the computer program of claim 11.


**Patentansprüche**

**1.** Verfahren zur Bestimmung möglicher Ausfallsfälle eines Systems, wobei das Verfahren folgende Schritte umfasst:

(a) das Empfangen eines Musters von Eingangsmerkmalen, wobei jedes Merkmal messbare Indikatoren repräsentiert, die ihrerseits den Zustand des Systems darstellen;
(b) die Bereitstellung einer Reihe von Ausfallsfällen, wobei jeder Ausfallsfall durch ein erwartetes Muster von Eingangsmerkmalen repräsentiert wird, wobei das erwartete Muster eine Reihe von Merkmalen, die gemäß den Erwartungen in dem Ausfallsfall vorliegen, und eine Reihe von Merkmalen, die gemäß den Erwartungen in dem Ausfallsfall nicht vorliegen, angibt; und
(c) für jeden Ausfallsfall das Durchführen eines Vergleichs des erwarteten Musters der diesen Ausfallsfall repräsentierenden Eingangsmerkmale, um mögliche Ausfallsfälle des Systems zu ermitteln;
wobei in Schritt (c) der Vergleich in folgenden untergeordneten Schritten erfolgt:

(c-i) das Berechnen einer Bewertung für jeden Ausfallsfall, um das erwartete Muster der Eingangsmerkmale, die diesen Ausfallsfall repräsentieren, mit dem empfangenen Muster der Eingangsmerkmale zu vergleichen;
(c-ii) das Bestimmen eines Subsatzes möglicher Ausfallsfälle auf der Grundlage der in Schritt (c-1) berechneten Bewertung und das Ermitteln, ob bei den möglichen Ausfallsfällen des Subsatzes Mehrdeutigkeiten vorliegen;
(c-iii) das Erstellen eines weiteren Eingangsmerkmals für jeden Ausfallsfall des Subsatzes, bei dem Mehrdeutigkeiten vorliegen, durch:

das Vorhersagen eines Werts für einen weiteren messbaren Indikator anhand eines Modells des Systems,
das Empfangen eines Messwerts für den weiteren Indikator und
das Vergleichen des vorhergesagten und des empfangenen Werts;

(c-iv) das Berechnen einer Bewertung für jeden Ausfallsfall des Subsatzes, um das erwartete Muster der Eingangsmerkmale, die diesen Ausfallsfall repräsentieren, mit dem empfangenen Muster der Eingangsmerkmale und dem weiteren, in Schritt (c-iii) erstellten Eingangsmerkmal zu vergleichen; und
(c-v) das Bestimmen der wahrscheinlichsten Ausfallsfälle auf der Grundlage der in Schritt (c-iv) berechneten Bewertungen.

**2.** Verfahren nach Anspruch 1, worin jedem Ausfallsfall eine Regel in Postfixnotation (umgekehrter polnischer Notation) zugeordnet ist, die ein wahres Ergebnis liefert, wenn das erwartete Muster für diese Regel mit einem Muster der Eingangsmerkmale korreliert, oder ein unwahres Ergebnis liefert, wenn das erwartete Muster für diese Regel nicht mit einem Muster der Eingangsmerkmale korreliert, und worin der Vergleich in Schritt (c) durch die Anwendung des empfangenen Musters von Eingangsmerkmalen auf jede Regel umfasst, um zu ermitteln, ob das empfangene Muster für den jeweiligen Ausfallsfall ein wahres oder unwahres Ergebnis liefert, wobei ein wahres Ergebnis einen möglichen Ausfallsfall des Systems anzeigt.

**3.** Verfahren nach Anspruch 2, worin die Regeln in einer aktualisierbaren Nachschlagetabelle gespeichert sind.

**4.** Verfahren nach einem der Ansprüche 1 bis 3, worin jedem Ausfallsfall ein oder mehrere Gewichtungsfaktoren zugeordnet sind, wobei jeder Gewichtungsfaktor für die Wahrscheinlichkeit des Vorliegens eines Fehlers in einer entsprechenden Systemkomponente steht, wobei das Verfahren ferner folgende Schritte umfasst:

(d) das Kombinieren der im untergeordneten Schritt (c-iv) berechneten Bewertung mit dem oder jedem Gewichtungsfaktor, der diesem Ausfallsfall zugeordnet ist, für jeden wahrscheinlichsten Ausfallsfall aus dem untergeordneten Schritt (c-v), um eine mögliche fehlerhafte Systemkomponente zu bestimmen.

**5.** Verfahren nach Anspruch 4, worin jede Systemkomponente eine Schnellwechseleinheit (LRU, Line Replaceable Unit) ist.

**6.** Verfahren nach einem der Ansprüche 4 bis 5, worin die Gewichtungsfaktoren in einer aktualisierbaren Nachschlagetabelle gespeichert sind.

**7.** Verfahren nach einem der vorangegangenen Ansprüche, das ferner vorhergehende Schritte zur Messung der Indikatoren und das Erstellen der Eingangsmerkmalsmuster umfasst.

**8.** Verfahren nach einem der vorangegangenen Ansprüche, worin das System ein Gasturbinentriebwerk ist.

**9.** Verfahren nach Anspruch 8, worin das Gasturbinentriebwerk an einem Flugzeug angebracht ist.

**10.** Computersystem, das konfiguriert ist, um ein Verfahren nach einem der Ansprüche 1 bis 9 auszuführen.

**11.** Computerprogramm, das, wenn es durch ein geeignetes Computersystem ausgeführt wird, ein Verfahren nach einem der Ansprüche 1 bis 9 durchführt.

**12.** Computerprogrammprodukt, das ein Computerprogramm nach Anspruch 11 umfasst.

**Revendications**

**1.** Procédé pour déterminer des cas de panne probables d'un système, le procédé comprenant les étapes de:

(a) recevoir un modèle de caractéristiques d'entrée, chaque caractéristique représentant des indicateurs mesurables qui sont eux-mêmes indicateurs de l'état du système;
(b) réaliser un ensemble de cas de panne, chaque cas de panne étant représenté par un modèle attendu de caractéristiques d'entrée, le modèle attendu spécifiant un ensemble de caractéristiques auquel on s'attend en cas de panne, et un ensemble de caractéristiques auquel on ne s'attend pas en cas de panne; et
(c) pour chaque cas de panne, exécuter une comparaison du modèle attendu de caractéristiques d'entrée représentant le cas de panne pour déterminer des cas de panne probables du système; où à l'étape (c), la comparaison est exécutée par les sous-étapes de:

(c-i) pour chaque cas de panne, calculer un score pour une comparaison du modèle attendu de caractéristiques d'entrée représentant ce cas de panne avec le modèle reçu de caractéristiques d'entrée;
(c-ii) déterminer un sous-ensemble de cas de panne probables sur la base des scores calculés à l'étape (c-i) et déterminer s'il y a une ambiguïté entre les cas de panne probables du sous-ensemble;
(c-iii) pour chaque cas de panne du sous-ensemble où il y a une ambiguïté, produire une autre caractéristique d'entrée en:

prédisant, à partir d'un modèle du système, une valeur pour un autre indicateur mesurable,
recevoir une valeur mesurée pour l'autre indicateur, et
comparer les valeurs prédites et reçues;

(c-iv) pour chaque cas de panne du sous-ensemble, calculer un score pour une comparaison du modèle attendu de caractéristiques d'entrée représentant ce cas de panne avec le modèle reçu de caractéristiques d'entrée et l'autre caractéristique d'entrée produite à l'étape (c-iii); et (c-v) déterminer les cas de panne les plus probables sur la base des scores calculés à l'étape (c-iv).

2. Procédé selon la revendication 1, dans lequel chaque cas de panne est associé à une règle dans une notation suffixée qui produit un résultat vrai si le modèle attendu pour cette règle est en corrélation avec un modèle de caractéristiques d'entrée ou un résultat faux si le modèle attendu pour cette règle n'est pas en corrélation avec un modèle de caractéristiques d'entrée, et à l'étape (c), la comparaison est exécutée en appliquant le modèle reçu de caractéristiques d'entrée à chaque règle pour déterminer si le modèle reçu a un résultat vrai ou un résultat faux pour le cas de panne respectif, un résultat vrai indiquant un cas de panne probable du système.

3. Procédé selon la revendication 2, dans lequel les règles sont stockées dans un tableau de conversion pouvant être mis à jour.

4. Procédé selon l'une quelconque des revendications 1 à 3, dans lequel chaque cas de panne est associé à un ou plusieurs facteurs de pondération, chaque facteur de pondération représentant une probabilité d'un défaut présent dans un composant respectif du système, le procédé comprenant en outre l'étape de:

   (d) combiner, pour chaque cas de panne le plus probable à partir de la sous-étape (c-v), le score calculé à la sous-étape (c-iv) avec le ou chaque facteur de pondération associé à ce cas de panne pour déterminer un composant de système défectueux probable.

5. Procédé selon la revendication 4, dans lequel chaque composant de système est une unité remplaçable en ligne.

6. Procédé selon l'une quelconque des revendications 4 à 5, dans lequel les facteurs de pondération sont stockés dans une table de conversion pouvant être mise à jour.

7. Procédé selon l'une quelconque des revendications précédentes, comprenant en outre les étapes préliminaires consistant à mesurer les indicateurs et à former le modèle des caractéristiques d'entrée.

8. Procédé selon l'une quelconque des revendications précédentes, dans lequel le système est un moteur de turbine à gaz.

9. Procédé selon la revendication 8, où le moteur de turbine à gaz est monté sur un aéronef.

10. Système informatique configuré pour exécuter le procédé selon l'une quelconque des revendications 1 à 9.

11. Programme d'ordinateur qui, lorsqu'il est exécuté sur un système informatique approprié, exécute le procédé selon l'une quelconque des revendications 1 à 9.

12. Produit de programme informatique contenant le programme informatique selon la revendication 11.

Fig. 1

**Fig. 2a**

**Fig. 2b**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0203041 A
- GB 2323197 A
- US 20050060323 A
- WO 020304 A

**Non-patent literature cited in the description**

- **DEVANEY et al.** Case-Based Reasoning for Gas Turbine Diagnostics. *American Association for Artificial Intelligence,* 2005
- **MILNE et al.** TIGER with model based diagnosis: initial deployment. *Knowledge-Based Systems,* 2001, vol. 14, 213-222
- **PECHT et al.** Evaluation of Built-In Test. *IEE Transactions on Aerospace and Electronic Systems,* January 2001, vol. 37 (1
- **RAUSCH et al.** Integrated In-Flight Fault Detection and Accommodation: A Model-Based Study. *ASME Turbo Expo 2005: Power for Land, Sea and Air,* 06 June 2005
- **BREIKIN et al.** Dynamic Modelling for Condition Monitoring of Gas Turbines: Genetic Algorithms Approach. *IFAC,* 2005